(19) Europäisches Patentamt
European Patent Office
Office européen des brevets

(11) **EP 3 781 807 B1**

(12) **EUROPEAN PATENT SPECIFICATION**

(45) Date of publication and mention of the grant of the patent:
**02.03.2022 Bulletin 2022/09**

(21) Application number: **18915620.1**

(22) Date of filing: **17.04.2018**

(51) International Patent Classification (IPC):
**F03D 1/06** (2006.01)     **F03D 7/04** (2006.01)
**F03D 9/00** (2016.01)

(52) Cooperative Patent Classification (CPC):
**F03D 7/0288; F03D 17/00;** F03D 7/0224;
F05B 2260/821; F05B 2270/17; F05B 2270/33;
F05B 2270/331; F05B 2270/802; F05B 2270/808;
Y02E 10/72

(86) International application number:
**PCT/CN2018/083258**

(87) International publication number:
**WO 2019/200526 (24.10.2019 Gazette 2019/43)**

(54) **METHOD OF TIP CLEARANCE CONTROL OF A WIND TURBINE GENERATOR AND CORRESPONDING COMPUTER PROGRAM PRODUCT, CONTROL SYSTEM AND GENERATOR**

VERFAHREN ZUM STEUERN DES ABSTANDS DER ROTORBLATTSPITZE EINER WINDTURBINE, COMPUTERPROGRAMMPRODUKT, STEUERUNGSSYSTEM UND WINDTURBINE

MÉTHODE DE CONTRÔLE DU JEU À L'EXTRÉMITÉ D'UNE PALE D'ÉOLIENNE ET PROGRAMME D'ORDINATEUR CORRESPONDANT, SYSTÈME DE CONTRÔLE ET ÉOLIENNE.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.02.2021 Bulletin 2021/08**

(73) Proprietor: **Envision Energy Co., Ltd.**
**Jiangyin**
**Wuxi**
**Jiangsu 214443 (CN)**

(72) Inventors:
• **WANG, Bikun**
**Jiangyin, Wuxi, Jiangsu 214431 (CN)**
• **WANG, Linpeng**
**Jiangyin, Wuxi, Jiangsu 214431 (CN)**
• **CHEN, Lin**
**Jiangyin, Wuxi, Jiangsu 214431 (CN)**

(74) Representative: **Qip Patentanwälte**
**Dr. Kuehn & Partner mbB**
**Goethestraße 8**
**80336 München (DE)**

(56) References cited:
EP-A2- 2 690 285          EP-A2- 2 726 735
WO-A1-2019/110624          CN-A- 102 953 924
CN-A- 102 953 925          CN-A- 103 047 078
US-A1- 2008 101 930          US-A1- 2012 132 011

• **Y. Deng ET AL: "Blade tip deflection calculations and safety analysis of wind turbine", Renewable Power Generation Conference (RPG 2013), 2nd IET, 9-11 Sept. 2013, 11 September 2013 (2013-09-11), pages 1-5, XP055261749, Beijing DOI: 10.1049/cp.2013.1841 Retrieved from the Internet: URL:http://ieeexplore.ieee.org/ielx7/67121 79/6718532/06718752.pdf?tp=&arnumber=67187 52&isnumber=6718532 [retrieved on 2016-03-31]**

**Description**

**Field of the Invention**

The present invention relates to tip clearance estimation and control of a wind turbine generator.

**Background of the Invention**

As the wind turbine design using longer blades to expect extracting more energy from wind, the blade tip clearance becomes a big challenge. When the blade is passing the tower, not only the extreme environment conditions such as wind shear, gust and turbulence will improve the probability of hitting the tower, but also the design blade becomes more and more flexible.

A Tip Clearance Control (TCC) method is introduced to active pitch behaviour when the blade is passing the tower. The close loop control method makes the system reliable and stable. The improved tip clearance will not only avoid the risk in wind site, it will also benefit the blade design.

US 2008/0101930 A1 discloses a wind turbine with a sensor that measures the out-of-plane deflection of the blades and a controller that uses the signal from the sensor to determine the risk of a tower strike. The controller takes any necessary action to prevent a tower strike when it determines that the risk of a strike is high. The sensor can include strain gages or accelerometers mounted on the blades or a fixed sensor mounted on the side of a tower to measure tower clearance as the blade passes by. The controller compares the measured out-of-plane deflection and the velocity of the blades to a predetermined operating envelope to determine if there is a risk of a tower strike. The control action taken can include pitching blades, yawing a nacelle, or stopping the wind turbine.

**Description of the Invention**

The invention is defined by the appended claims.

An objective is achieved by a method, a control system for a wind turbine generator, a wind turbine generator, and a computer programme product for executing instructions as will be outlined in the following. An objective is achieved by a method of tip clearance control (TCC) of a wind turbine generator having a rotor with at least one blade rotating relatively to a tower and with a tip clearance between a blade tip of at least one blade and the tower. The method comprises an act of measuring on the wind turbine generator a set of operational values and a set of blade load values.

The operational values may include values of pitch angles, generator speed, or torque.

There is an act of estimating the tip clearance between a blade tip and the tower as a function of the set of operational values and the set of blade load values. There is an act of generating a control command (310) from the estimated tip clearance.

The control command may be applied to the wind turbine generator directly.

As the wind turbine rotor becomes larger, tip clearance issues arise and even pose limits to the wind turbine design. In order to improve tip clearance, a tip clearance control (TCC) method is designed to guarantee a minimum safety tip clearance. When the controller detects that a tip clearance is below a certain threshold, the TCC will give individual pitch commands to three different pitch settings in order to bend-up the whole rotor plane to avoid an extreme tip clearance event.

The TCC uses a tip clearance estimator as system input. The estimator uses a linear and nonlinear combination of the blade load, pitch angle, generator speed, and torque, in order to generate an estimated tip clearance.

Signals are measured from different sensors. The minimum tip clearance is when a blade passes the tower and the algorithm or method is designed to combine and sample three blade estimate tip clearances in a window to make a discrete input signal.

The TCC may have a double PI (proportional integral) control module inside the controller. A first PI-controller is configured to generate how much hub tilt bending moment that is expected to avoid the extreme tip clearance situation. The second PI-controller is configured to change the bending moment error to the individual pitch commands. The expected tip clearance is transferred into bending moment through the first PI controller and the bending moment will be transferred to the demanded pitch angle in DQ axis through the second PI controller. The pitch angle in DQ axis is transferred into three pitch commands though a classic reverse DQ transformation.

The TCC functionality or method can be divided into three parts.

The first part may be signal measurements used as input to the method. The signals may include basic wind turbine performance or operational information including measures of pitch angle, generator speed and torque.

Different blade element loads may also be acquired. A load can be obtained through several train gauge sensors mounted inside the blade surface. The number of the strain gauges will decide the accuracy of the estimated tip clearance.

The load measure may be obtained using fibre optic sensing solution. Load measures may be acquired, as will be outlined later.

The second part may be the tip clearance estimate.

This TC estimate may make use of linear regression based on wind turbine basic sensory information or measures as outlined. One way to perform a linear fitting is to use a least square method.

The third part of the TCC function may be a double PI control in a closed loop method.

The TCC functionality or method may use two separate PI controllers where the parameters are calibrated. The propagation parameter and the integrate parameter may or will depend on the wind turbine model.

An additional part may be where the signals or commands are passed through a reverse DQ transformation to decompose or split the signal or command into three pitch signals in the case of a three-bladed rotor.

According to the invention, the method of tip clearance control comprises the act of estimating the tip clearance which comprises an act of determining:

$$Y_{TC} = x_1 + x_2 \cdot \theta + x_3 \cdot \omega + x_4 \cdot T + x_5 \cdot M_{bladeroot} + x_6 \cdot M_{SHtilt} + x_7 \cdot F_{thrust}$$

In an aspect, the act of determining tip clearance (1220) $Y_{TC}$ (1230) involves determining $M_{SHtilt}$ (the tilt moment) by acts of fitting of available $M_{bladeroot}$ (the blade load moment). There may be used two different $M_{bladeroot}$ for a wind turbine generator with at least two blades. There may be used three different $M_{bladeroot}$ for a wind turbine generator with at least three blades, and so forth.

According to the invention, the act of determining tip clearance as

$$Y_{TC} = x_1 + x_2 \cdot \theta + x_3 \cdot \omega + x_4 \cdot T + x_5 \cdot M_{bladeroot} + x_6 \cdot M_{SHtilt} + x_7 \cdot F_{thrust}$$

involves solving

$AX = Y$

where

$$A = \begin{bmatrix} 1 & \theta_1 & \omega_1 & T_1 & M_{bladeroot_1} & M_{SHtilt_1} & F_{thrust_1} \\ 1 & \theta_2 & \omega_2 & T_2 & M_{bladeroot_2} & M_{SHtilt_2} & F_{thrust_2} \\ \vdots & \vdots & \vdots & \vdots & \vdots & \vdots & \vdots \\ 1 & \theta_N & \omega_N & T_N & M_{bladeroot_N} & M_{SHtilt_N} & F_{thrust_N} \end{bmatrix}$$

$$X = \begin{bmatrix} x_1 \\ x_2 \\ x_3 \\ x_4 \\ x_5 \\ x_6 \\ x_7 \end{bmatrix}, Y = \begin{bmatrix} Y_{TC_1} \\ Y_{TC_2} \\ \vdots \\ Y_{TC_N} \end{bmatrix}$$

The equations are filled by the measured set of operational values and measured set of blade load values. $Y_{TC}$ is the tip clearance. That is the distance between the blade tip and the tower, when a blade passes the tower. The tip clearance may be a similar measure of the distance between the tip of a blade and the tower or a stationary part.

The operational values are as follows: $\theta$ is the pitch angle, $\omega$ is the generator speed, and T is the generator torque.

$M_{bladeroot}$ is a measure of a flap-wise moment of blade root. $M_{SHtilt}$ is a measure of tilt moment of a stationary hub. $M_{SHtilt}$ may be obtained as a nonlinear combination of 3 three different blade root flap-wise loads.

$F_{thrust}$ is the thrust of the rotor. $F_{thrust}$ may be obtained as linear combination of three different blade root flap-wise loads.

$x_1$ to $x_7$ are constants determined based on operational data and in example determined by regression fitting and solving the set of equations.

In an aspect, the act of generating a control command is performed by acts as will be described.

There may be an act of generating a first command as a function of estimated tip clearance and set point tip clearance, where the first command is a set point tilt moment command.

This act may be followed by an act of generating a second command as a function of the first command and a measured hub tilt moment, where the second command is a pitch command.

In an aspect, the act of generating the control command involves an act of using an IPC (individual pitch control) with a dynamic look-up table with a lower limit and an upper limit, and wherein only the lower limit is changed as a function of the estimated tip clearance.

The dynamic look-up table may comprise hub tilt moments as a function of wind speeds. There may be an upper limit profile and there may be a lower limit profile.

The dynamics may be in that the upper limit profile and/or the lower limit profile change as a function of say wind speeds.

This may be advantageous during extreme wind conditions such as wind shear and wind change conditions. In example, if a change or a fast change, of say hub load, is detected, then a (individual) pitch command or set point lower limit value may be increased or the upper limit value may be decreased to anticipate the behaviour of pitch commands.

In an aspect, the method further comprises an act of transforming (which transform may be a DQ-transform) the control command (which may be a pitch command) to individual blade commands that is to individual blade pitch commands.

In an aspect, the measured set of blade load values are obtained as measurement from one or more of the blade values measuring means. There may be a mechanical strain-gauge. There may be a fiber optic strain-gauge. There may be a laser setup. There may be a camera setup. Combinations may be used to provide better accuracy or data redundancy.

In an aspect, the measured set of blade load values are obtained as a mechanical strain-gauge setup, wherein the mechanical setup includes a Wheatstone bridge setup and means for calibration.

The outlined actions may be implemented in a computer program product comprising instructions which, when the program is executed by a computer, cause the computer to perform the actions.

The outlined actions may be implemented in a wind turbine generator control system comprising means for carrying out the actions. The wind turbine generator control system may be implemented with a computer program product and a computer as outlined.

In an aspect, the wind turbine generator control system may include means for measuring a set of blade load values, which means may comprise a strain gauge sensor mounted on the inside of the blade root surface.

In an aspect, the strain gauge sensor is configured in a Wheatstone bridge configuration.

In example, the tip clearance reconstruction and an IPC hub load input depend on the blade root load.

In an aspect, the blade load may be obtained using a strain gauge sensor mounted inside the blade root surface. The controller can get three blade root sensor signals as load input and the sensors may be calibrated.

A bracket glue on the blade inside surface with epoxy glue and GRP (glass reinforced plastic) may be used not to make damage to blade surface. The sensor may be mounted on the bracket with screws making this solution convenient for maintenance.

The strain sensor may consist of a strain gauge, a signal amplifier, and a mechanical protection. The strain sensor is configured to measure the micro strain of blade root surface by a strain gauge Wheatstone bridge. The sensor is configured to transform the micro strain into a voltage signal, which represents blade root load after calibration.

Besides an actual (closed) control loop system or method, then acts and components may be isolated to provide a method or a system of estimating tip clearance. Such method of estimating a tip clearance between a blade tip and a tower on a wind turbine generator may comprise the outlined acts without generating or performing the control acts.

## Description of the Drawing

The invention is described by example only and with reference to the drawings, whereon:

Fig. 1    illustrates the tip clearance (TC) on a wind turbine generator;
Fig. 2    illustrates a wind turbine generator tip clearance control flow or controller;
Fig. 3    illustrates a rotor and with blades and examples of tip clearance sampling;
Fig. 4    illustrates tip clearance values as a function of time;
Fig. 5    illustrates a control system with a first controller and a second controller;
Fig. 6    illustrates the effect of tip clearance control (TCC)
Fig. 7    illustrates a tip clearance control system or method of a wind turbine generator; and
Fig. 8    illustrates fittings of data used in estimating tip clearance.

**Detailed Description of the Invention**

| Item | No |
|---|---|
| Wind turbine generator, WTG | 1 |
| Tower | 2 |
| Nacelle | 3 |
| Rotor | 4 |
| Blade | 5 |
| Blade root | 6 |
| Blade tip | 7 |
| Tip Clearance (TC) | 8 |
| Blade load measuring means | 10 |
| Strain gauge sensor | 20 |
| Tip Clearance control system | 100 |
| Set of operational values | 110 |
| Set of blade load values | 150 |
| Sampling window | 170 |
| TC Estimator | 200 |
| Estimated tip clearance | 210 |
| Set point tip clearance | 215 |
| Controller/WTG control system | 300 |
| Control command | 310 |
| First control command | 311 |
| Second control command | 312 |
| First controller | 320 |
| Second controller | 340 |
| Computer program | 400 |
| Tip Clearance control | 1000 |
| Measuring | 1100 |
| Estimating | 1200 |
| Determining Ytip clearance | 1220 |
| Ytip clearance | 1230 |
| Generating | 1300 |
| Adjusting | 1400 |

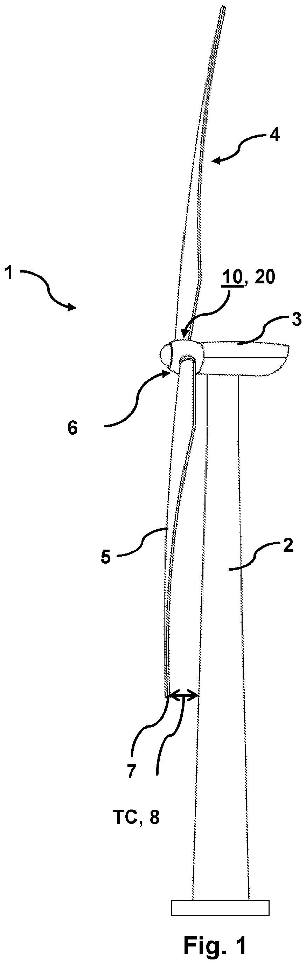

Figure 1 illustrates a wind turbine generator with a nacelle 3, a rotor 4 with at least one blade rotating relatively to a tower, and a tip clearance between a blade tip 7 of at least one blade and the tower. A blade 5 extends from a blade root 6 towards a blade tip 7. Between a blade tip 8 and the tower 2 there is a tip clearance (TC) 8. The tip clearance (TC) is the lower most blade 5 of the rotor 4.

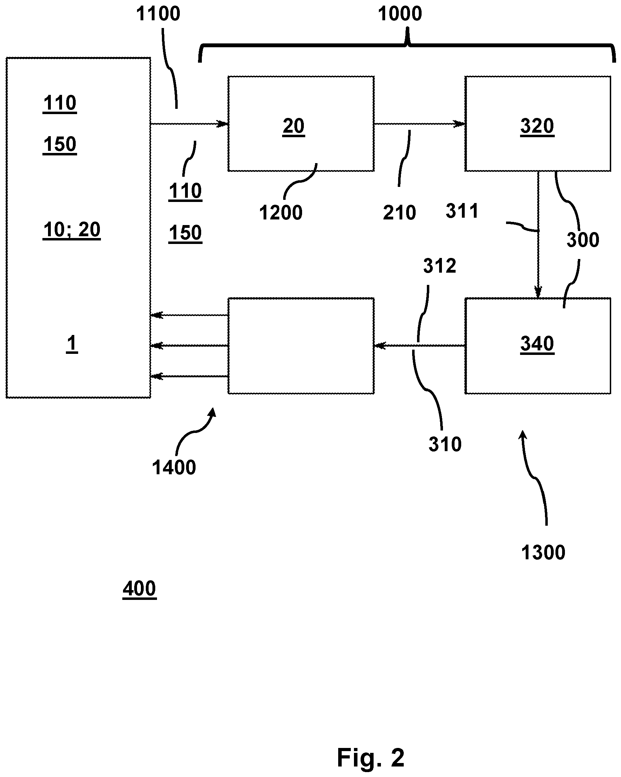

Figure 2 illustrates a method or system of tip clearance control 1000 of a wind turbine generator 1 as exemplified in figure 1. The method comprises acts of measuring 1100 on the wind turbine generator 1 a set of operational values 110. The operational values 110 may include values of pitch angle, generator speed, and torque. The operational values 110 include a set of blade load values 150, which blade load values may be obtained by blade load measuring means 10 as exemplified and such as strain gauge sensors 20.

There is an act of estimating 1200 the tip clearance 210 between a blade tip 7 and the tower 2 as a function of the set of operational values 110 and the set of blade load values 150.

There is an act of generating 1300 a control command 310 from the estimated tip clearance 210. The act of generating the control command 310 is performed by a controller 300, which controller here is shown as a first controller 320 providing a first control command 311 to a second controller 340 generating the second control command 312.

There is a further act of adjusting 1400 the wind turbine 1 by individually pitching each blade as shown as three individual pitch controls commands of the assumed three blade wind turbine shown in figure 1.

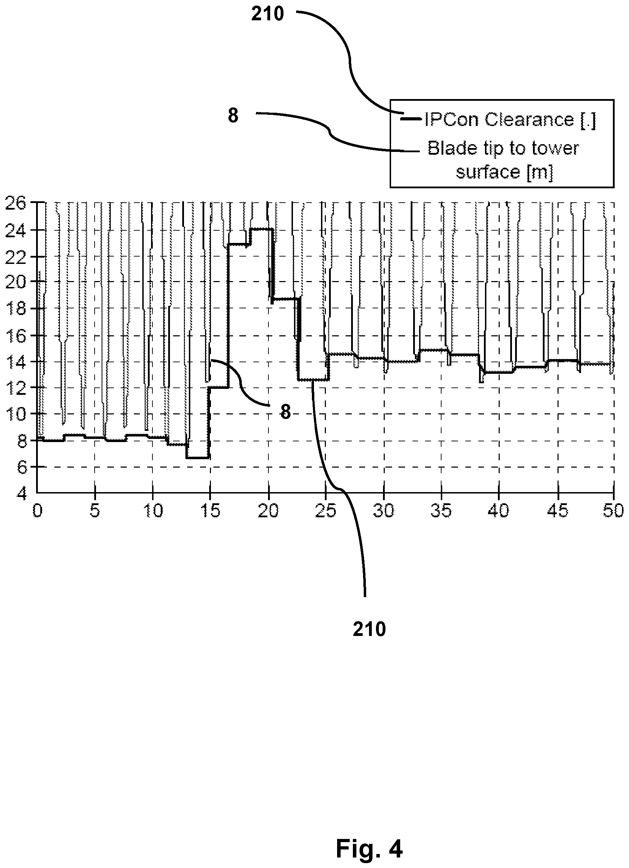

The first controller 320 and second controller 340 are further detailed in figure 4.

The instructions that may be executed on a computer may be stored in a computer program 400.

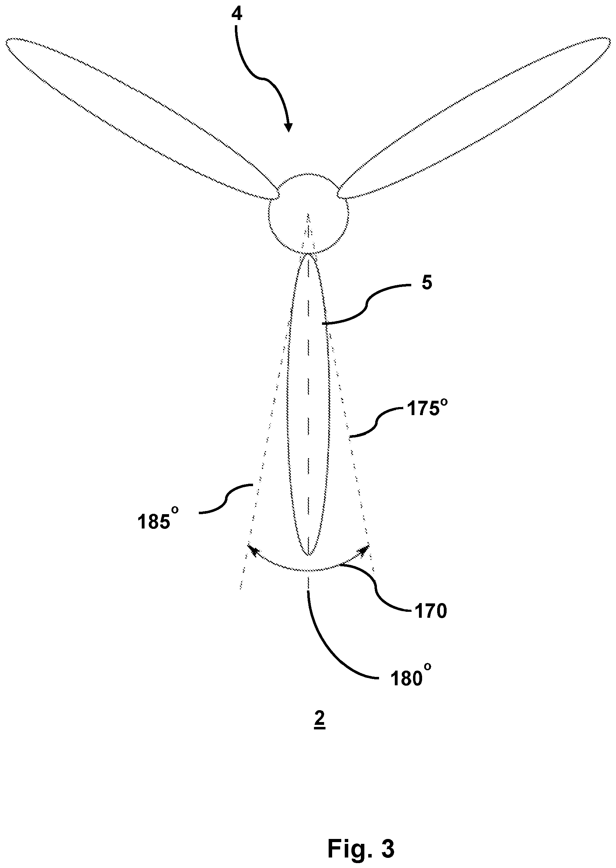

Figure 3 illustrates a rotor 4 and a blade 5 passing a tower 2 (which centre is illustrated as a dotted line). When the blade passes the tower 2, a sample estimates the tip clearance in azimuth angle range in a sampling window 170, which window may cover say 175-185 degrees.

For every 120 degrees azimuth angle, there will be an 110 degrees azimuth angle stay and hold status. In example, figure 4 illustrates the actual tip clearance 8 of a blade 5 to the tower 2 and the estimated tip clearance 210. The X-axis is time in seconds and the Y-axis is in metres for the particular wind turbine. The plateau seen in the estimated tip clearance 210 is a sample and hold for each blade 5 in a three blade 5 rotor 4 separated by 120 degrees, which sample and hold is maintained for 110 degrees azimuth angle.

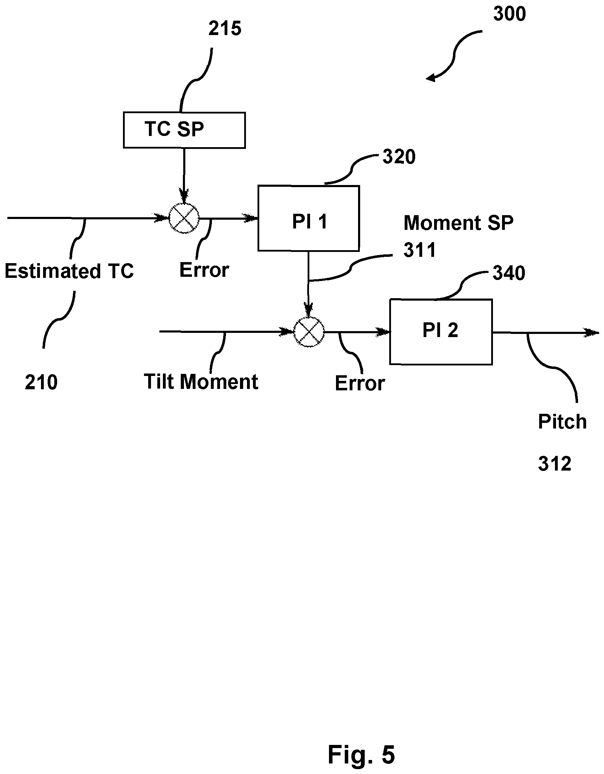

Figure 5 exemplifies a double PI control configuration. A set point of the tip clearance (TC SP) 215 may be a constant parameter or dynamically regulated. The error between the tip clearance set point 215 and an estimated tip clearance 210 value is transferred into a hub tilt moment set point for the first PI-controller (PI 1). As exemplified, the tip clearance set-point 215 is compared to an estimated tip clearance 210 provided by a tip clearance estimator 200 (not shown here). The error or result of the comparison is provided to a first controller 320 that may be a PI-controller shown as PI 1, which first controller 320 is configured to output wind turbine hub tilt moment set-point.

The tilt moment set-point is compared to a tilt moment and the error or the result of the comparison is provided to a second controller 340 that may be a PI-controller shown as PI 2, which second controller 340 is configured to output a pitch control command.

In summary, figure 5 illustrates a particular aspect of figure 2 being the act of generating 1300 a control command 310 by an act of generating a first command (311) as a function of estimated tip clearance 210 and set point tip clearance 215. The first command 311 is a set point tilt moment command. The act is followed by an act of generating a second command 312 as a function of the first command 311 and a measured hub tilt moment, where the second command 312 is a pitch command. The second command 312 may be further transformed into the control command 310 (not shown).

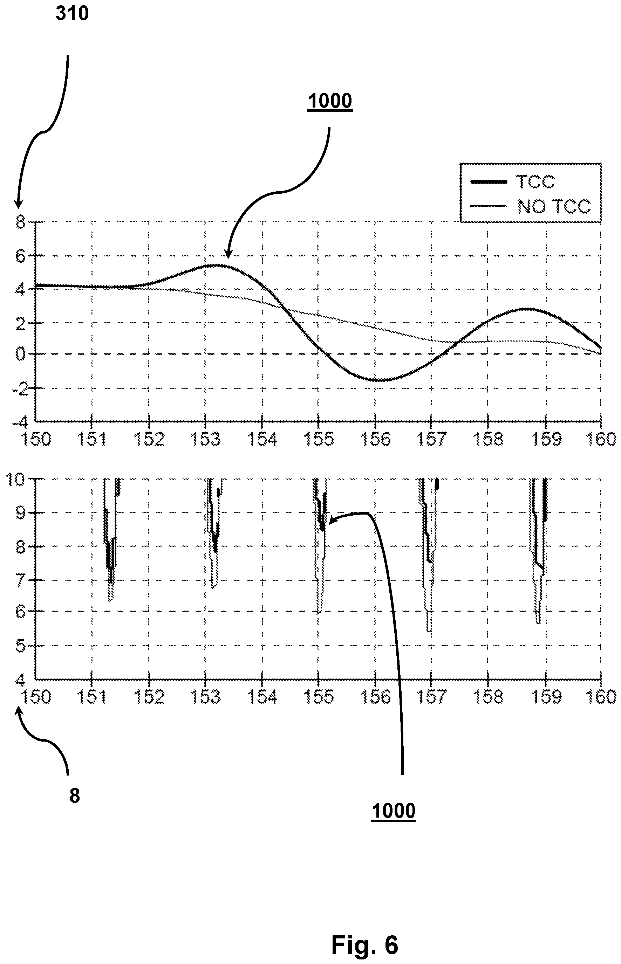

Figure 6 illustrates the effect of a tip clearance control (TCC). The top figure illustrates a pitch angle control with (dark line) tip clearance control (TCC) 1000 and a pitch angle control without (light line) tip clearance control (NO TCC). The bottom figure illustrates the tip clearance 8.

The tip clearance 8 is shown with the method of tip clearance control 1000 and without (light line).

If the tip clearance 8 is lower than the TCC threshold at a particular cycle (see around 151 on the X-axis), the TCC will start working during a few subsequent cycles.

As shown, the controller of the wind turbine starts pitching after the first cycle (around 151) and the tip clearance is increased.

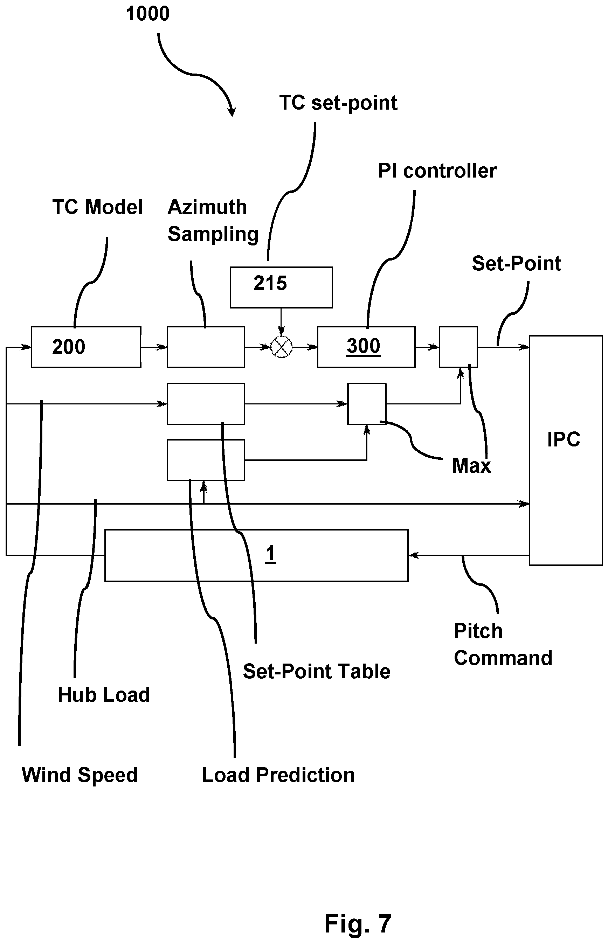

Figure 7 outlines an embodiment of a tip clearance control (TCC) 1000 of a wind turbine 1 in order to improve tip clearance. The embodiment may be understood as a series of actions, a collection of system components or actions installed on a computer or computer program product so that when the actions are performed as instructions the computer will generate commands. With the outlined wind turbine product, TCC (tip clearance control) improves tip clearance safety and may guarantee a minimum tip clearance and satisfy critical load requirements.

The closed TCC 1000 and wind turbine generator 1 system may be made operational as described in the following.

After getting data from sensors, the TCC functionality will enable an IPC (individual pitch control) algorithm to bend-up the rotor plane of the wind turbine generator 1 to avoid an extreme tip clearance.

An IPC-SP (set point) is obtained from a set-point table.

If the IPC-PV (process value) is below the SP, the IPC-PI (Proportional Integration) controller will tune the PV to the SP. The TCC-loop will also get an IPC-SP and compare it to the original IPC-SP. When TCC-SP is larger than the IPC-SP, then the IPC will work even when Hub Load is in normal range.

A TC Model 200 is used to simulate tip clearance. Since tip clearance may not be used directly as an input to the controller, then turbine performance or operation signals are used to reconstruct the tip clearance. Such operational values may include blade root loads, pitch angles, generator speed, torque, and hub tilt moment.

The tip clearance is, according to the invention, estimated by solving the following equations in the TC Model 200.

$$Y_{TC} = x_1 + x_2 \cdot \theta + x_3 \cdot \omega + x_4 \cdot T + x_5 \cdot M_{bladeroot} + x_6 \cdot M_{SHtilt} + x_7 \cdot F_{thrust}$$

$$A = \begin{bmatrix} 1 & \theta_1 & \omega_1 & T_1 & M_{bladeroot_1} & M_{SHtilt_1} & F_{thrust_1} \\ 1 & \theta_2 & \omega_2 & T_2 & M_{bladeroot_2} & M_{SHtilt_2} & F_{thrust_2} \\ \vdots & \vdots & \vdots & \vdots & \vdots & \vdots & \vdots \\ 1 & \theta_N & \omega_N & T_N & M_{bladeroot_N} & M_{SHtilt_N} & F_{thrust_N} \end{bmatrix}$$

$$X = \begin{bmatrix} x_1 \\ x_2 \\ x_3 \\ x_4 \\ x_5 \\ x_6 \\ x_7 \end{bmatrix}, Y = \begin{bmatrix} Y_{TC_1} \\ Y_{TC_2} \\ \vdots \\ Y_{TC_N} \end{bmatrix}$$

$$AX = Y$$

$Y_{TC}$ is the tip clearance. That is the distance between the blade tip and the tower, when a blade passes the tower. The tip clearance may be a similar measure of the distance between the tip of a blade and the tower or a stationary part.

The operational values are as follows: $\theta$ is the pitch angle, $\omega$ is the generator speed, and T is the generator torque.

$M_{bladeroot}$ is a measure of a flap-wise moment of blade root. $M_{SHtilt}$ is a measure of tilt moment of a stationary hub. $M_{SHtilt}$ may be obtained as a nonlinear combination of 3 three different blade root flap-wise loads.

$F_{thrust}$ is the thrust of the rotor. $F_{thrust}$ may be obtained as linear combination of three different blade root flap-wise loads.

x1 to x7 are constants determined based on operational data and in example determined by regression fitting and solving the set of equations.

In example a standard regression model is used to determine the constants. A least square-fit has proven one approach to approximate the fitted curve.

Having determined the X-parameters, then an estimated tip clearance may be determined as:

$$Y' = AX$$

The estimated value of tip clearance is thus a least square fit to the real value of tip clearance Y.

The estimated value Y' may be considred real value Y with associated tolerances. Furthermore, the estimated value work well is easy to implement as a linear regression method in hardware.

$M_{SHtilt}$ may be the result of a nonlinear result of three different $M_{bladeroot}$ values and determined as:

$$M_{SHtilt} = \cos\varphi \, M_{b,1} + \cos(\varphi + 2\pi/3) M_{b,2} + \cos(\varphi + 4\pi/3) M_{b,3}$$

$F_{thrust}$ may be obtained as linear combination of three different blade root flap-wise loads.

$$F_{thrust} = (M_{b,1} + M_{b,2} + M_{b,3})/3L$$

$\varphi$ is the azimuth angle and L is the length of a blade

Thereby, blade root load sensor values are used to estimate tip clearance and to perform tip clearance control.

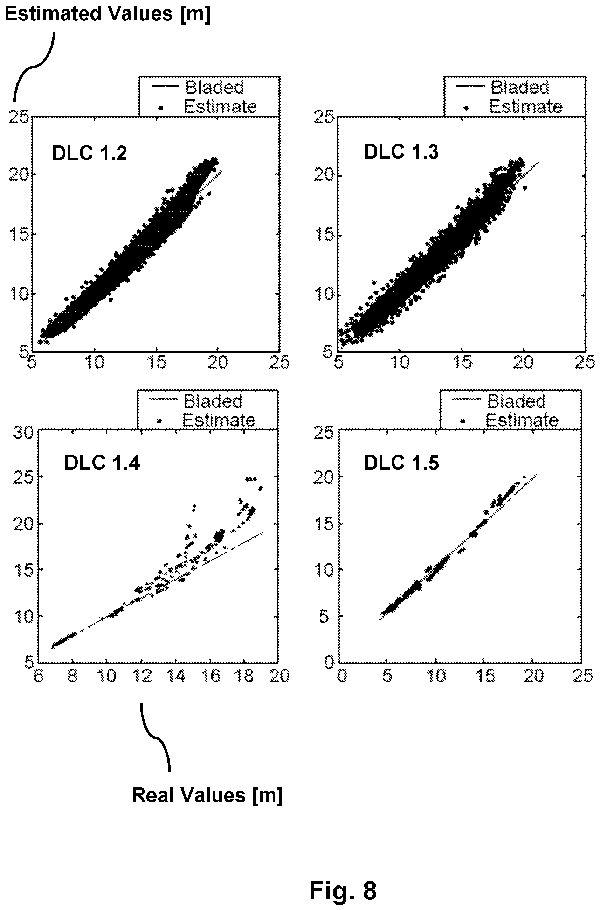

With reference to figure 8, time series data are extracted from the wind turbine when a blade is passing the tower in design load cases 1.x (DLC 1.x). Mean data is sampled in 180 $\pm$ 5 degrees azimuth angle. The total data number is n and an origin dataset is obtained. The fittings of the data are performed for DLC1.2, DLC1.3, DLC1.4 and DLC1.5 to change the different DLC contribution percentages to the results.

In the equations above, data is provided in matrix A and a least square fitting method may be to perform a linear regression. A parameter contribution is the results of constants in vector X and normalization of A. In particular, it has been observed that blade root moment has highest correlation with tip clearance.

The identified parameter is used to check the fitting results in DLC 1.x as in figure 8. With a focus on the estimated tip clearance below 10 m, the reconstruction error is around ± 0.5m.

The data examples shown and the azimuth sampling are to be seen in connection with figure 3. An estimated tip clearance signal of every blade is processed into one input tip clearance signal provided to the controller. Due to the sampling section, the tip clearance signal is highly discrete as seen in figure 4.

When a blade passes the tower, the controller will sample the estimated tip clearance in an azimuth angle range between say 175-185 degrees. For every 120 degrees azimuth angle, there will be a 110 degrees azimuth angle "stay-and-hold" status.

There may optionally be a controller, such as a PI-controller with two options. There is a first option where the control loop is an open loop control that keeps the estimated tip clearance to a set-point. There is a second option to keep the estimated tip clearance to a value our output of a function and use this in a closed loop control.

The resulting outcome of the TCC-module is to lift or increase the lower IPC set-point, which will have the resulting effect of the IPC to bed-up the rotor.

There is a dynamic look-up table. The original IPC is configured to reduce rotor asymmetry load by use of Coleman transformation to process the hub tilt moment and hub yaw moment signal. A PI controller may be configured to tune the load reduction effect. Reduction of the hub fatigue load will contribute to or accumulate pitch bearing damage.

The dynamic look-up table may provide that the IPC function will not only benefit the extreme load. The enable and disable condition is a look-up table which is also the control set point. The look-up table has an upper limit and a lower limit.

If the hub moment processed value is out of the look-up table range, the IPC function will work to control the hub moment to the table limit. This will (significantly) reduce unnecessary IPC pitch behaviour, and thus reduce pitch bearing damage.

The look-up table is a two dimension table including wind speed and calibrated hub moment value. The wind speed data comes from a wind estimator inside the controller and there may be a specified value that depends on a trade-off between hub fatigue loads and pitch bearing damage.

The TCC functionality only changes the lower limit of IPC set point to control the hub bending up to avoid extreme tip clearance. Thus, the normal IPC and the TCC will not be in conflict.

Thus, both objectives of sharing a single IPC set point table (IPC-SP) and trying to keep the hub load inside a normal range are achieved.

As for the load prediction and in order to improve the IPC ability in extreme wind shear condition and extreme wind change condition, the change rate of the hub load may also be considered and taken into account. The change rate of a filtered hub load will change the dynamic IPC look-up table. If the module detects a fast change of the hub load, then it will increase the IPC set point lower limit or reduce the set point of upper limit to anticipate the IPC behavior.

**Claims**

1. A method of tip clearance control (TCC) (1000) of a wind turbine generator (1) having a rotor (4) with at least one blade (5) rotating relatively to a tower (2) and with a tip clearance (8) between a blade tip (7) of at least one blade (5) and the tower (2); the method comprising the acts of:

   - measuring (1100) on the wind turbine generator (1) a set of operational values (110) and a set of blade load values (150);
   - estimating (1200) the tip clearance (210) between a blade tip (7) and the tower (2) as a function of the set of operational values (110) and the set of blade load values (150);
   - generating (1300) a control command (310) from the estimated tip clearance (210);

   wherein the act of estimating (1200) the tip clearance (8) comprises an act of determining:

   $$Y_{TC} = x_1 + x_2 \cdot \theta + x_3 \cdot \omega + x_4 \cdot T + x_5 \cdot M_{bladeroot} + x_6 \cdot M_{SHtilt} + x_7 \cdot F_{thrust};$$

   wherein the act of determining tip clearance (1220)

$$Y_{TC} = x_1 + x_2 \cdot \theta + x_3 \cdot \omega + x_4 \cdot T + x_5 \cdot M_{bladeroot} + x_6 \cdot M_{SHtilt} + x_7 \cdot F_{thrust}$$

involves solving

$AX = Y$

where

$$A = \begin{bmatrix} 1 & \theta_1 & \omega_1 & T_1 & M_{bladeroot_1} & M_{SHtilt_1} & F_{thrust_1} \\ 1 & \theta_2 & \omega_2 & T_2 & M_{bladeroot_2} & M_{SHtilt_2} & F_{thrust_2} \\ \vdots & \vdots & \vdots & \vdots & \vdots & \vdots & \vdots \\ 1 & \theta_n & \omega_n & T_n & M_{bladeroot_n} & M_{SHtilt_n} & F_{thrust_n} \end{bmatrix}, X = \begin{bmatrix} x_1 \\ x_2 \\ x_3 \\ x_4 \\ x_5 \\ x_6 \\ x_7 \end{bmatrix}, Y = \begin{bmatrix} Y_{TC_1} \\ Y_{TC_2} \\ \vdots \\ Y_{TC_n} \end{bmatrix}$$

by using the measured set of operational values (110) and measured set of blade load values (150); wherein $Y_{TC}$ is the tip clearance (8);

wherein the operational values (110) are as follows: $\theta$ is the pitch angle, $\omega$ is the generator speed, and $T$ is the generator torque;

wherein $M_{bladeroot}$ is a measure of a flap-wise moment of blade root;

wherein $M_{SHtilt}$ is a measure of tilt moment of a stationary hub;

wherein $F_{thrust}$ is the thrust of the rotor (4);

wherein $x_1$ to $x_7$ are constants determined based on operational data.

2. The method of tip clearance control (TCC) (1000) according to claim 1, wherein the act of determining tip clearance (1220) $Y_{TC}$ (1230) involves determining $M_{SHtilt}$ by acts of fitting of available $M_{bladeroot}$, such as two different $M_{bladeroot}$ for a wind turbine generator (1) with at least two blades, such as three different $M_{bladeroot}$ for wind turbine generator (1) with at least three blades, etc.

3. The method of tip clearance control (TCC) (1000) according to any preceding claims, wherein the act of generating (1300) a control command (310) is performed by:

   - an act of generating a first command (311) as a function of estimated tip clearance (210) and set point tip clearance (215), where the first command (311) is a set point tilt moment command, followed by
   - an act of generating a second command (312) as a function of the first command (311) and a measured hub tilt moment, where the second command (312) is a pitch command.

4. The method of tip clearance control (TCC) (1000) according to any preceding claims, wherein the act of generating the control command (310) involves an act of using an Individual Pitch Control with a dynamic look-up table with a lower limit and an upper limit, and wherein only the lower limit is changed as a function of the estimated tip clearance (210).

5. The method of tip clearance control (TCC) (1000) according to any preceding claims, wherein the method further comprises an act of transforming the control command (310) to individual blade commands.

6. The method of tip clearance control (TCC) (1000) according to any preceding claims, wherein the measured set of blade load values (150) are obtained as measurement from one or more of the blade values measuring means (10) being chosen amongst:

   - a mechanical strain-gauge;
   - a fiber optic strain-gauge;
   - a laser setup;
   - a camera setup;
   - or combinations of such.

7. The method of tip clearance control (TCC) (1000) according to claim 6, wherein the measured set of blade load values (150) are obtained as a mechanical strain-gauge setup, wherein the mechanical setup includes a Wheatstone bridge setup and means for calibration.

8. A computer program product (400) comprising instructions which, when the program is executed by a computer, cause the computer to perform the actions of one or more of claims 1 to 7.

9. A wind turbine generator control system (300) comprising means for carrying out the actions of one or more of claims 1 to 7.

10. A wind turbine generator (1) comprising a control system (300) according to claim 9.

11. The wind turbine generator (1) according to claim 10, wherein the means for measuring a set of blade load values (150) comprises a strain gauge sensor (20) mounted on the inside of the blade root (6) surface.

12. The wind turbine generator (1) according to claim 11, wherein the strain gauge sensor (20) is configured in a Wheatstone bridge configuration.

**Patentansprüche**

1. Verfahren zur Spitzenabstandssteuerung (Tip Clearance Control, TCC) (1000) eines Windturbinengenerators (1), der einen Rotor (4) mit mindestens einem Blatt (5) aufweist, das sich relativ zu einem Mast (2) dreht und einen Spitzenabstand (8) zwischen einer Blattspitze (7) mindestens eines Blattes (5) und dem Mast (2) aufweist; wobei das Verfahren folgende Aktionen umfasst:

- Messen (1100), an dem Windturbinengenerator (1), eines Satzes von Betriebswerten (110) und eines Satzes von Blattlastwerten (150);
- Schätzen (1200) des Spitzenabstands (210) zwischen einer Blattspitze (7) und dem Mast (2) als eine Funktion des Satzes von Betriebswerten (110) und des Satzes von Blattlastwerten (150);
- Generieren (1300) eines Steuerbefehls (310) aus dem geschätzten Spitzenabstand (210); wobei die Aktion des Schätzens (1200) des Spitzenabstands (8) eine Aktion des Bestimmens von:

$$Y_{TC} = x_1 + x_2 \cdot \theta + x_3 \cdot \omega + x_4 \cdot T + x_5 \cdot M_{bladeroot} + x_6 \cdot M_{SHtilt} + x_7 \cdot F_{thrust}$$

umfasst, wobei die Aktion des Bestimmens des Spitzenabstands (1220)

$$Y_{TC} = x_1 + x_2 \cdot \theta + x_3 \cdot \omega + x_4 \cdot T + x_5 \cdot M_{bladeroot} + x_6 \cdot M_{SHtilt} + x_7 \cdot F_{thrust}$$

das Lösen von *AX = Y,*
wobei

$$A = \begin{bmatrix} 1 & \theta_1 & \omega_1 & T_1 & M_{bladeroot_1} & M_{SHtilt_1} & F_{thrust_1} \\ 1 & \theta_2 & \omega_2 & T_2 & M_{bladeroot_2} & M_{SHtilt_2} & F_{thrust_2} \\ \vdots & \vdots & \vdots & \vdots & \vdots & \vdots & \vdots \\ 1 & \theta_n & \omega_n & T_n & M_{bladeroot_n} & M_{SHtilt_n} & F_{thrust_n} \end{bmatrix}, X = \begin{bmatrix} x_1 \\ x_2 \\ x_3 \\ x_4 \\ x_5 \\ x_6 \\ x_7 \end{bmatrix}, Y = \begin{bmatrix} Y_{TC_1} \\ Y_{TC_2} \\ \vdots \\ Y_{TC_1} \end{bmatrix}$$

unter Verwendung des gemessenen Satzes von Betriebswerten (110) und des gemessenen Satzes von Blattlastwerten (150) umfasst;

wobei $Y_{TC}$ das Spitzenabstand (8) ist;

wobei die Betriebswerte (110) folgende sind: $\theta$ ist der Anstellwinkel, $\omega$ ist die Generatordrehzahl und $T$ ist das Generatormoment;

wobei $M_{bladeroot}$ ein Maß für ein Schlagmoment der Blattwurzel ist;

wobei $M_{SHtilt}$ ein Maß für ein Neigungsmoment einer ortsfesten Nabe ist;

wobei $F_{thrust}$ der Schub des Rotors (4) ist;

wobei $x_1$ bis $x_7$ Konstanten sind, die auf der Grundlage von Betriebsdaten bestimmt werden.

2.  Verfahren zur Spitzenabstandssteuerung (Tip Clearance Control, TCC) (1000) nach Anspruch 1, wobei die Aktion des Bestimmens des Spitzenabstands (1220) $Y_{TC}$ (1230) ein Bestimmen von $M_{SHtilt}$ durch Aktionen eines Fittens von verfügbarem $M_{bladeroot}$, wie zum Beispiel zwei verschiedene $M_{bladeroot}$ für einen Windturbinengenerator (1) mit mindestens zwei Blättern, wie zum Beispiel drei verschiedene $M_{bladeroot}$ für einen Windturbinengenerator (1) mit mindestens drei Blättern usw. umfasst.

3.  Verfahren zur Spitzenabstandssteuerung (Tip Clearance Control, TCC) (1000) nach einem der vorangehenden Ansprüche, wobei die Aktion des Generierens (1300) eines Steuerbefehls (310) durchgeführt wird durch:

    - eine Aktion des Generierens eines ersten Befehls (311) als eine Funktion des geschätzten Spitzenabstands (210) und des Sollwert-Spitzenabstands (215), wobei der erste Befehl (311) ein Sollwert-Neigungsmomentbefehl ist, gefolgt von
    - einer Aktion des Generierens eines zweiten Befehls (312) als eine Funktion des ersten Befehls (311) und eines gemessenen Nabenneigungsmoments, wobei der zweite Befehl (312) ein Anstellwinkelbefehl ist.

4.  Verfahren zur Spitzenabstandssteuerung (Tip Clearance Control, TCC) (1000) nach einem der vorangehenden Ansprüche, wobei die Aktion des Generierens des Steuerbefehls (310) eine Aktion des Verwendens einer individuellen Anstellwinkelsteuerung mit einer dynamischen Nachschlagetabelle mit einer Untergrenze und einer Obergrenze umfasst und wobei nur die Untergrenze als eine Funktion des geschätzten Spitzenabstands (210) geändert wird.

5.  Verfahren zur Spitzenabstandssteuerung (Tip Clearance Control, TCC) (1000) nach einem der vorangehenden Ansprüche, wobei das Verfahren des Weiteren eine Aktion des Umwandelns des Steuerbefehls (310) in einzelne Blattbefehle umfasst.

6.  Verfahren zur Spitzenabstandssteuerung (Tip Clearance Control, TCC) (1000) nach einem der vorangehenden Ansprüche, wobei der gemessene Satz von Blattlastwerten (150) als Messung von einem oder mehreren der Blattwertmessmittel (10) erhalten wird, die ausgewählt werden aus:

    - einem mechanischen Dehnungsmessstreifen;
    - einem faseroptischen Dehnungsmessstreifen;
    - einer Lasereinrichtung;
    - einer Kameraeinrichtung;
    - oder Kombinationen davon.

7.  Verfahren zur Spitzenabstandssteuerung (Tip Clearance Control, TCC) (1000) nach Anspruch 6, wobei der gemessene Satz von Blattlastwerten (150) als eine mechanische Dehnungsmessstreifeneinrichtung erhalten wird, wobei die mechanische Einrichtung eine Wheatstone-Brückeneinrichtung und Mittel zum Kalibrieren umfasst.

8.  Computerprogrammprodukt (400), das Instruktionen umfasst, die, wenn das Programm durch einen Computer ausgeführt wird, den Computer veranlassen, die Aktionen nach einem oder mehreren der Ansprüche 1 bis 7 durchzuführen.

9.  Windturbinengenerator-Steuerungssystem (300), umfassend Mittel zum Ausführen der Aktionen nach einem oder mehreren der Ansprüche 1 bis 7.

10. Windturbinengenerator (1), umfassend ein Steuerungssystem (300) nach Anspruch 9.

11. Windturbinengenerator (1) nach Anspruch 10, wobei das Mittel zum Messen eines Satzes von Blattlastwerten (150) einen Dehnungsmessstreifensensor (20) umfasst, der an der Innenseite der Oberfläche der Blattwurzel (6) montiert ist.

**12.** Windturbinengenerator (1) nach Anspruch 11, wobei der Dehnungsmessstreifensensor (20) in einer Wheatstone-Brückenkonfiguration ausgebildet ist.

**Revendications**

**1.** Procédé de commande de jeu d'extrémité (TCC, *tip clearance control)* (1000) d'un générateur éolien (1) comportant un rotor (4) doté d'au moins une pale (5) tournant par rapport à une tour (2) et présentant un jeu d'extrémité (8) entre une extrémité de pale (7) d'au moins une pale (5) et la tour (2) ; le procédé comprenant les actions consistant à :

- mesurer (1100) sur le générateur éolien (1) un ensemble de valeurs de fonctionnement (110) et un ensemble de valeurs de charge de pale (150) ;
- estimer (1200) le jeu d'extrémité (210) entre une extrémité de pale (7) et la tour (2), en fonction de l'ensemble de valeurs de fonctionnement (110) et de l'ensemble de valeurs de charge de pale (150) ;
- générer (1300) une instruction de commande (310) à partir du jeu d'extrémité estimé (210) ;

dans lequel l'action d'estimation (1200) du jeu d'extrémité (8) comprend une action de détermination de :

$$Y_{TC} = x_1 + x_2 \cdot \theta + x_3 \cdot \omega + x_4 \cdot T + x_5 \cdot M_{bladeroot} + x_6 \cdot M_{SHtilt} + x_7 \cdot F_{thrust};$$

dans lequel l'action de détermination du jeu d'extrémité (1220)

$$Y_{TC} = x_1 + x_2 \cdot \theta + x_3 \cdot \omega + x_4 \cdot T + x_5 \cdot M_{bladeroot} + x_6 \cdot M_{SHtilt} + x_7 \cdot F_{thrust}$$

consiste à résoudre : $AX = Y,$
où

$$A = \begin{bmatrix} 1 & \theta_1 & \omega_1 & T_1 & M_{bladeroot_1} & M_{SHtilt_1} & F_{thrust_1} \\ 1 & \theta_2 & \omega_2 & T_2 & M_{bladeroot_2} & M_{SHtilt_2} & F_{thrust_2} \\ \vdots & \vdots & \vdots & \vdots & \vdots & \vdots & \vdots \\ 1 & \theta_n & \omega_n & T_n & M_{bladeroot_n} & M_{SHtilt_n} & F_{thrust_n} \end{bmatrix}, X = \begin{bmatrix} x_1 \\ x_2 \\ x_3 \\ x_4 \\ x_5 \\ x_6 \\ x_7 \end{bmatrix}, Y = \begin{bmatrix} Y_{TC_1} \\ Y_{TC_2} \\ \vdots \\ Y_{TC_n} \end{bmatrix}$$

en utilisant l'ensemble mesuré de valeurs de fonctionnement (110) et l'ensemble mesuré de valeurs de charge de pale (150) ; dans lequel $Y_{TC}$ est le jeu d'extrémité (8) ;
dans lequel les valeurs de fonctionnement (110) sont les suivantes : $\theta$ est l'angle de calage, $\omega$ est la vitesse de générateur, et $\omega$ est le couple de générateur ;
où $M_{bladeroot}$ est la mesure d'un moment dans le sens du battement de pied de pale ;
où $M_{SHtilt}$ est une mesure de moment de basculement d'un moyeu fixe ;
où $F_{thrust}$ est la poussée du rotor (4) ;
où $x_1$ à $x_7$ sont des constantes déterminées sur la base de données de fonctionnement.

**2.** Procédé de commande de jeu d'extrémité (TCC) (1000), selon la revendication 1, dans lequel l'action de détermination du jeu d'extrémité (1220) $Y_{TC}$ (1230) consiste à déterminer $M_{SHtilt}$ par des actions d'ajustement de moments $M_{bladeroot}$ disponibles, notamment deux moments $M_{bladeroot}$ différents pour un générateur éolien (1) doté d'au moins deux pales, notamment trois moments $M_{bladeroot}$ différents pour un générateur éolien (1) doté d'au moins trois pales, etc.

**3.** Procédé de commande de jeu d'extrémité (TCC) (1000) selon l'une quelconque des revendications précédentes, dans lequel l'action de génération (1300) d'une instruction de commande (310) est exécutée au moyen de :

- une action de génération d'une première instruction (311) en fonction d'un jeu d'extrémité estimé (210) et d'une valeur de consigne de jeu d'extrémité (215), dans lequel la première instruction (311) est une valeur de consigne d'instruction de moment de basculement, suivie de :

- une action de génération d'une seconde instruction (312) en fonction de la première instruction (311) et d'un moment mesuré de basculement de moyeu, dans lequel la seconde instruction (312) est une instruction de pas.

4. Procédé de commande de jeu d'extrémité (TCC) (1000) selon l'une quelconque des revendications précédentes, dans lequel l'action de génération de l'instruction de commande (310) implique une action d'utilisation d'une commande de pas individuelle avec une table de consultation dynamique présentant une limite inférieure et une limite supérieure, et dans lequel seule la limite inférieure est modifiée en fonction du jeu d'extrémité estimé (210).

5. Procédé de commande de jeu d'extrémité (TCC) (1000) selon l'une quelconque des revendications précédentes, dans lequel le procédé comprend en outre une action de transformation de l'instruction de commande (310) en des instructions de pales individuelles.

6. Procédé de commande de jeu d'extrémité (TCC) (1000) selon l'une quelconque des revendications précédentes, dans lequel l'ensemble mesuré de valeurs de charge de pale (150) est obtenu en tant que mesure issue d'un ou de plusieurs moyen(s) de mesure de valeurs de pales (10) choisi(s) parmi :

   - un extensomètre ;
   - un extensomètre à fibre optique ;
   - un montage laser ;
   - un montage de prise de vues ;
   - ou des combinaisons de ceux-ci.

7. Procédé de commande de jeu d'extrémité (TCC) (1000) selon la revendication 6, dans lequel l'ensemble mesuré de valeurs de charge de pale (150) est obtenu en tant que montage mécanique d'extensomètre, dans lequel le montage mécanique comprend un montage en pont de Wheatstone et des moyens d'étalonnage.

8. Produit-programme informatique (400) comprenant des instructions qui, lorsque le programme est exécuté par un ordinateur, font accomplir à l'ordinateur les actions d'une ou de plusieurs des revendications 1 à 7.

9. Système de commande de générateur éolien (300) comprenant des moyens destinés à réaliser les actions d'une ou de plusieurs des revendications 1 à 7.

10. Générateur éolien (1) comprenant un système de commande (300) selon la revendication 9.

11. Générateur éolien (1) selon la revendication 10, dans lequel le moyen de mesure d'un ensemble de valeurs de charge de pale (150) comprend un capteur extensométrique (20) monté à l'intérieur de la surface de pied de pale (6).

12. Générateur éolien (1) selon la revendication 11, dans lequel le capteur extensométrique (20) est configuré selon une configuration en pont de Wheatstone.

**Fig. 1**

**1100**                    **1000**

**110**

**150**

**110**

**10; 20**                **150**

**20**          **320**

**1200**        **210**    **311**

**300**

**312**

**1**          **340**

**1400**        **310**

**1300**

**400**

**Fig. 2**

**Fig. 3**

**210**

**8**

IPCon Clearance [.]

Blade tip to tower surface [m]

**8**

**210**

**Fig. 4**

300

215

TC SP

320

PI 1

Moment SP
311

Estimated TC

Error

340

210

Tilt Moment

Error

PI 2

Pitch

312

Fig. 5

**310**

**1000**

**8**

**1000**

**Fig. 6**

Fig. 7

**Estimated Values [m]**

**Real Values [m]**

**Fig. 8**

**EP 3 781 807 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20080101930 A1